# EUROPÄISCHE PATENTSCHRIFT

(11) **EP 2 132 493 B1**
(45) Veröffentlichungstag und Bekanntmachung des Hinweises auf die Patenterteilung: **22.09.2010**
(21) Anmeldenummer: 08716344.0
(22) Anmeldetag: 07.03.2008
(51) Int. Cl.: F24J 2/14, F24J 2/54

(54) **PARABOLRINNENKOLLEKTOR**
PARABOLIC TROUGH COLLECTOR
MIROIR CYLINDRO-PARABOLIQUE

(30) Priorität: 30.03.2007 DE 102007015850; 05.06.2007 DE 102007026473
(43) Veröffentlichungstag der Anmeldung: 16.12.2009
(73) Patentinhaber: Amaton SA, 4700 Eupen (BE)
(72) Erfinder: KUNZ, Günther, B-4850 Montzen (BE)
(74) Vertreter: Kohlmann, Kai
(86) Internationale Anmeldenummer: PCT/EP2008/001829
(87) Internationale Veröffentlichungsnummer: WO 2008/119435

(56) Entgegenhaltungen:
- WO-A-2005/120172
- GB-A- 2 235 786
- US-A- 2 182 222
- US-A- 2 906 257
- US-A- 4 078 549
- US-A- 4 249 514
- US-A- 5 169 456

## Beschreibung

Die Erfindung betrifft einen Parabolrinnenkollektor mit einer reflektierenden Oberfläche, die das Sonnenlicht auf einen in der Brennlinie verlaufenden Absorber bündelt, wobei die reflektierende Oberfläche auf mindestens einem Paneel mit einem parabolischen Querschnitt und einer in Längsrichtung des Parabolrinnenkollektors geradlinigen Ausdehnung angeordnet ist und an der konvexen Unterseite jedes Paneels eine Tragkonstruktion angeordnet ist, die gelenkig mit einem den Parabolrinnenkollektor tragenden Unterbau verbunden ist.

Parabolrinnenkollektoren bestehen im Wesentlichen aus parabelförmig gewölbten reflektierenden Flächen, die das Sonnenlicht auf einen in der Brennlinie verlaufenden Absorber bündeln. Die Brennlinie und der Scheitelpunkt der Parabel spannen die Symmetrieebene der parabolisch geformten reflektierenden Oberfläche auf. Die Länge solcher Kollektoren liegt je nach Bauart üblicherweise zwischen wenigen Metern und 150 Meter. Kürzere Parabolrinnenkollektoren können als einzelne Module zu einem Kollektorfeld zusammengefasst werden. In den Absorbern wird die konzentrierte Sonnenstrahlung in Wärme umgesetzt und an ein umlaufendes Fluid, insbesondere Wasser oder ein anderes flüssiges oder gasförmiges Medium, abgegeben.

Die Parabolrinnen werden aus Kostengründen meist nur um eine Achse schwenkbar ausgeführt und insoweit der Sonneneinstrahlungsrichtung nachgeführt.

Die europäische Patentschrift EP 1 397 621 B1 offenbart einen derartigen Parabolrinnenkollektor, der mehrere selbsttragende Paneele aufweist, die einen parabolischen Querschnitt und eine in Längsrichtung gradlinige Ausdehnung besitzen. Die Paneele dienen dazu, die mit ihnen verbundene dünne reflektierende Oberfläche zu tragen. Mit ihrer konvexen Seite ist das Paneel an einem in Längsrichtung verlaufenden röhrenförmigen Tragelement angeordnet, das mit einer automatisierten Einrichtung zur Drehung um die Achse des Tragelementes versehen ist, damit die reflektierenden Oberflächen auf die Paneele der Sonnenbewegung folgen können. Die Paneele können entweder unmittelbar an dem ringförmigen Tragelement befestigt sein oder sich an den am röhrenförmigen Tragelement angeordneten, quer verlaufenden Trägerrippen abstützen.

In jedem Fall benötigen die Parabolrinnenkollektoren nach dem Stand der Technik eine stabile Tragkonstruktion, um den Paneelen eine hinreichende Steifigkeit zu verleihen. Die Anforderungen an die Formgenauigkeit und statische Steifigkeit der die reflektierenden Oberflächen tragenden Tragkonstruktionen von Parabolrinnenkollektoren sind außerordentlich hoch, da insbesondere Biege- und Torsionskräfte infolge von Eigengewicht und Windlasten aufgenommen werden müssen, ohne dass ein Überschreiten einer definierbaren, maximalen Deformation der Parabel zu einem Leistungsverlust führt.

Durch die hohen Anforderungen an die Genauigkeit der Parabelform ist eine Herstellung von Parabolrinnenkollektoren in speziell dafür ausgerüsteten Fabrikationsanlagen erforderlich. Durch diesen Umstand entstehen hohe Kosten von der Transportlogistik bis hin zur Montage auf der Baustelle, weil die Bauelemente einerseits sehr fragil und andererseits sehr sperrig sind.

Um eine preiswerte Herstellung und einen einfachen Gebrauch auch durch unerfahrene Kräfte zu ermöglichen, offenbart das Dokument US 2 906 257 A einen Parabolrinnenkollektor mit einer reflektierenden Schicht, die das Sonnenlicht auf einen in der Brennlinie verlaufenden Absorber bündelt. Der Absorber befindet sich bei dem Parabolrinnenkollektor in Verlängerung seitlicher Drehzapfen, die an Endstücken des Parabolrinnenkollektors angeordnet sind. An der konvexen Unterseite der reflektierenden Schicht ist eine Tragkonstruktion angeordnet, die aus sich nach unten erstreckenden, an einem zentralen Punkt unterhalb des Kollektors zusammenlaufenden Verspannungsstreben sowie aus Metallrohren gebildet und seitlich durch die Endstücke begrenzt wird. Die Endstücke stellen eine Halterung für eine sich nach oben erstreckende Stütze dar. Die Stütze wird aus an den Endstücken befestigten Seitenwangen gebildet, die über ein oberhalb der Brennlinie angeordnetes Rohr miteinander verbunden sind. An einem zentralen Punkt dieses Rohrs sind vier Drähte angeordnet, die diagonal zu den Ecken des Parabolrinnenkollektors laufen. Jedes Drahtseil weist ein Spannschloss auf, um die Drähte vorzuspannen.

Die aus aufwendiger Unterkonstruktion an der Unterseite und Drahtseilabspannung an der Oberseite gebildete Struktur des Parabolrinnenkollektors nach der US 2 906 257 A ist statisch ausreichend stabil. Aufgrund der hohen von der Drahtseilabspannung auf das Rohr der Stütze ausgeübten Kräfte, muss dieses recht stark dimensioniert sein. Insoweit zieht der notwendige Rohrdurchmesser eine unerwünschte Verschattung der reflektierenden Oberfläche nach sich. Nachteilig ist weiter, dass mit zunehmender Länge in dem Parabolrinnenkollektor größere Biegespannungen auftreten, so dass dessen maximale Länge im Interesse einer noch vertretbaren maximalen Deformation der Parabel beschränkt ist.

Ausgehend von diesem Stand der Technik liegt der Erfindung daher die Aufgabe zu Grunde, einen Parabolrinnenkollektor zu schaffen, der konstruktiv einfacher aufgebaut ist, sich einfach montieren und deshalb auch in Teilen transportieren lässt und gleichwohl eine hohe Parabelgenauigkeit bei hoher Steifigkeit und größerer maximaler Baulänge gewährleistet. Die Lösung beruht auf dem Gedanken, eine aufwendige Tragkonstruktion an der Unterseite der reflektierenden Oberfläche des Parabolrinnenkollektors entbehrlich zu machen und zugleich die an dem Parabolrinnenkollektor auftretenden statischen und dynamischen Kräfte optimal abzuleiten.

Im Einzelnen wird die Aufgabe bei einem Parabolrinnenkollektor der eingangs erwähnten Art dadurch gelöst,
- dass die Tragkonstruktion von mindestens drei an der konvexen Unterseite des Parabolrinnenkollektors angeordneten, sich quer zu dessen Längsrichtung erstreckenden Stützspanten gebildet wird, wobei ausgehend von den stirnseitigen Stützspanten an jedem zweiten Stützspant eine sich nach oben erstreckende Stütze (10) angeordnet ist,
- dass an jedem Stützspant eine Drehlagerung zur drehbeweglichen Anordnung des Parabolrinnenkollektors um eine zu dessen Längsachse parallele Drehachse angeordnet ist.

Die erforderliche Torsionssteifigkeit des Parabolrinnenkollektors wird durch das Zusammenwirken der Tragkonstruktion mit den oberhalb der Parabolrinne pyramidal angeordneten Kraftübertragungsmitteln erzielt. Vorzugsweise je zwei Paneele, insbesondere in Form von Strukturblechen mit den dazugehörigen formstabilen Spanten bilden die Basis für eine gerade Pyramide, gebildet aus der Stütze, die sich auf dem mittleren Spant abstützt und einer aus den Kraftübertragungsmitteln, vorzugsweise Drahtseilen, gebildeten Abspannung zwischen einem Anschlag für die Drahtseile an der Stütze zu den Ecken der Pyramide - vorzugsweise den äußeren Endbereichen der äußeren Spanten. Hierdurch werden optimale Hebelverhältnisse bei der Krafteinleitung sichergestellt. Die Befestigungspunkte können jedoch auch an anderen Positionen der Tragkonstruktion liegen, sofern die Verbindung der Kraftübertragungsmittel mit der Tragkonstruktion zu beiden Seiten der Symmetrieebene der parabolisch geformten reflektierenden Oberfläche in gleichem Abstand gewährleistet ist. Ein größerer Abstand zur Symmetrieebene bringt jedoch eine verbesserte Ableitung der an dem Parabolrinnenkollektor angreifenden Kräfte mit sich.

Die Tragkonstruktion muss in der Lage sein, in den Paneelen auftretende Schubspannungen zu übertragen. Dies kann entweder durch hinreichend steife Paneele in Verbindung mit sich quer zur Längsrichtung des Parabolrinnenkollektors erstreckende Stützspanten erfolgen. Sofern weniger steife Paneele zum Einsatz gelangen, z. B. Strukturbleche, weist die Tragkonstruktion in Längsrichtung Längsaussteifungen auf, insbesondere an den Rändern der Spanten. Zusätzlich können ggf. in Längsrichtung an der Unterseite der Paneele insbesondere V-förmige Profile angeordnet sein. Die Längsaussteifungen an den Rändern der Strukturbleche sind vorzugsweise fest mit deren Unterseite verbunden, um das Strukturblech auch in den Randbereichen beidseitig fest einzuspannen und damit lokale Verformungen des Strukturblechs, beispielsweise durch angreifende Windlasten zu vermeiden. Zusätzlich kann das Strukturblech zur randnahen Stabilisierung um die Längsaussteifung abgewinkelt sein. Die Spanten sind ein tragendes Bauteil der Tragkonstruktion und zugleich Träger der Paneele. Durch diese Bauweise wird gegenüber einer massiven Tragkonstruktion erheblich Gewicht eingespart.

Die erfindungsgemäße Anordnung ist in einem hohen Maße torsionssteif bei gleichzeitig reduziertem Konstruktionsaufwand und -gewicht. Die dünnen Stäbe bzw. Drahtseile der Abspannung haben eine äußerst geringe Verschattung der reflektierenden Oberfläche zur Folge. Darüber hinaus kann die insbesondere stabförmige Stütze zugleich mit einer Halterung für den Absorber ausgerüstet sein und damit eine Doppelfunktion erfüllen.

Durch Aneinanderreihung gleichartiger Pyramiden kann über eine nahezu beliebige Länge eine hohe Torsionssteifigkeit eines Parbolrinnenkollektors erzeugt werden. Die durch die Verspannung aufgenommenen Kräfte werden dabei über die an jedem Stützspant angeordnete Drehlagerung an den formstabilen Unterbau abgeleitet und verlagern den zu betreibenden Stabilitätsaufwand von der formgenauen Parabolrinne auf den weniger aufwendigen Unterbau.

In regelmäßigen Abständen, deren Entfernung durch die verfügbaren Fertigungsbreiten der Spiegelfolien (derzeit max. 1,25 m) nach oben begrenzt ist, werden die formstabilen Spanten angeordnet und durch die Paneele, vorzugsweise in Form von Strukturblechen, miteinander verbunden. Die Befestigung der Strukturbleche an den Spanten erfolgt dergestalt, dass am Strukturblech angeordnete Verbindungselemente, z. B. angeschweißte Winkelstücke mit den Spanten verschraubt werden. Die Verschraubungsöffnungen sind an den Spanten derart angeordnet, dass über die Verschraubung die gewünschte Parabelform der Strukturbleche erzeugt wird. Durch den Parabolrinnenkollektor entsteht eine Trennung der Funktionen:
- Die Formgenauigkeit der reflektierenden Oberfläche ist alleine durch die Tragkonstruktion, insbesondere in Form der Spanten und ggf. Längsaussteifungen sowie der Paneele, insbesondere in Form der Strukturbleche gegeben. Statische Biegekräfte brauchen nicht berücksichtigt zu werden.
- Der formstabile Unterbau übernimmt über die an jedem Stützspant angeordneten Lager die statischen Kräfte.

Die punktuellen Abweichungen der Parabolrinne vom örtlichen idealen Parabelquerschnitt sind minimal, so dass der Intercept Faktor γ maximal wird. Die Fokalbreite (infolge der Aufweitung des reflektierten Sonnenstrahlenkegels) ist kleiner als bei allen bisher realisierten Parabolrinnen und der Absorberrohrdurchmesser kann die Fokalbreite übertreffen, wodurch der Intercept Faktor γ = 100 % ist.

In vorteilhafter Ausgestaltung der Erfindung können durch an dem Unterbau justierbare Drehlagerungen für die Tragkonstruktion Toleranzen des Unterbaus ausgeglichen werden. Dadurch kann der Unterbau durch jedes am Aufstellungsort ansässige Unternehmen mit geringen Fachkenntnissen angefertigt werden und braucht nicht in einer speziellen Fertigungsanlage produziert und anschließend transportiert zu werden.

Nachfolgend wird die Erfindung anhand eines Ausführungsbeispieles näher erläutert. Es zeigen
- Figur 1: eine perspektivische Ansicht eines erfindungsgemäßen Parabolrinnenkollektors von der Unterseite aus gesehen,
- Figur 2: eine perspektivische Ansicht des Parabolrinnenkollektors nach Figur 1 von der Oberseite aus gesehen,
- Figuren 3 a)-c): die statischen Kraftverhältnisse an einem Parabolrinnenkollektor nach Figuren 1 und 2,
- Figur 4: die Reaktionskräfte auf die Drehlagerungen an einem Parabolrinnenkollektor mit sieben Stützspanten,
- Figur 5: die statischen Kraftverhältnisse an einem Parabolrinnenkollektor unter Berücksichtigung einer durch Windlasten verursachten asymmetrisch wirkenden Zusatzkraft,
- Figur 6: eine perspektivische Ansicht einer Drehlagerung des Parabolrinnenkollektors nach Figuren 1 und 2 sowie
- Figur 7: eine perspektivische Ansicht einer bevorzugten Ausführungsform einer Stütze des Parabolrinnenkollektors nach Figuren 1 und 2.

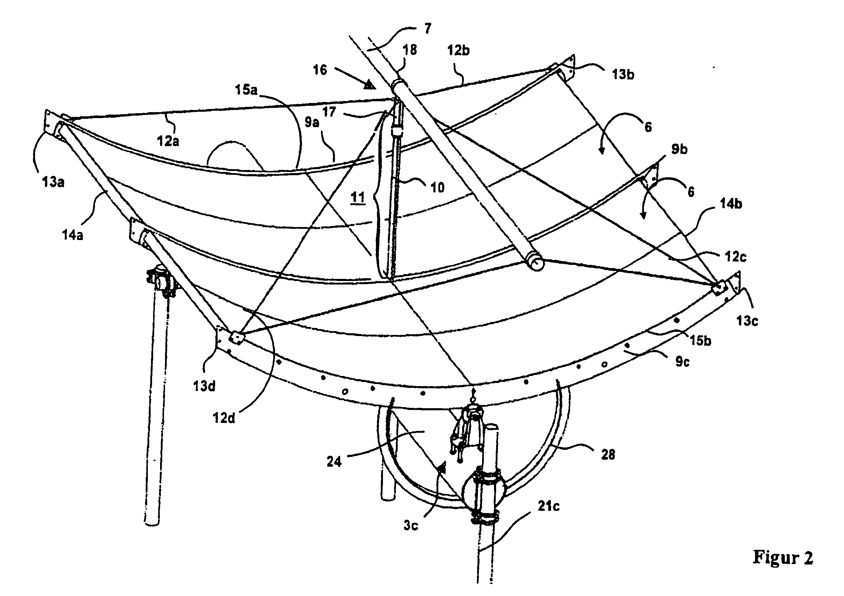

Der Parabolrinnenkollektor (1) besteht im Wesentlichen aus einem Unterbau (2), der über Drehlagerungen (3) mit einer Tragkonstruktion (4) für zwei Paneele (5) verbunden ist. Auf der aus Figur 2 erkennbaren Oberfläche der Paneele (5) ist eine reflektierende Spiegelfolie (6) aufgebracht, die das auf deren Oberfläche auftreffende Sonnenlicht auf einen in der Brennlinie verlaufenden Absorber (7) bündelt. Die Paneele (5) mit parabolischem Querschnitt erstrecken sich in Längsrichtung (8) des Parabolrinnenkollektors (1) gradlinig.

Die insgesamt mit (4) bezeichnete Tragkonstruktion des Parabolrinnenkollektors (1) wird von drei an der konvexen Unterseite des Parabolrinnenkollektors angeordneten, sich quer zu dessen Längsrichtung (8) erstreckenden Stützspanten (9 a, 9 b, 9 c) sowie Längsaussteifungen (19 a - 19 d) gebildet, wobei der zwischen den beiden stirnseitigen Stützspanten (9 a, 9 c) angeordnete Stützspant (9 b) eine in den Figuren nicht näher erkennbare Halterung für eine stabförmige Stütze (10) trägt. Die Halterung kann beispielsweise so ausgeführt sein, dass an der nach oben weisenden Schmalseite des mittleren Stützspantes (9 b) ein Zapfen angeordnet ist, der in eine entsprechende, am unteren Ende der Stütze (10) angeordnete Ausnehmung formschlüssig eingreift. Die Stütze (10) selbst befindet sich in der Symmetrieebene der durch die Paneele (5) parabolisch aufgespannten Fläche, wobei die Achse der Parabel über die gesamte Länge des Parabolrinnenkollektors in der Symmetrieebene liegt. Dabei bezeichnet die Achse der Parabel die Verbindungsgrade vom Brennpunkt der Parabel zu deren Scheitel. Die Spanten (9 a - c) sind quer zur Längsachse (8) des Parabolrinnenkollektors parabolisch ausgebildet und im Querschnitt vorzugsweise derart profiliert, dass sie in Richtung der Längsachse (8) auftretenden Kräften ein hohes Widerstandsmoment entgegensetzen. Als Profilquerschnitte kommen beispielsweise Rechteckprofile, T-Profile oder I-Profile in Betracht.

Im Abstand (11) zu der Befestigung der Stütze (10) an dem Stützspant (9 b) sind in übereinstimmender Höhe vier Drahtseile (12 a, b, c, d) angeschlagen, die mit ihren gegenüberliegenden Enden mit den äußeren Endbereichen (13 a, 13 b, 13 c, 13 d) der zu dem mittleren Stützspant (9 b) benachbarten Stützspanten (9 a, 9 c) verbunden sind. Die vier Drahtseile (12 a, b, c, d) bilden die Seitenkanten einer geraden Pyramide, deren Spitze von den an der Stütze (10) zusammenlaufenden Drahtseilen gebildet wird. Die Drahtseile weisen sämtlich eine übereinstimmende Länge auf. Die Kanten der Grundfläche der durch die Drahtseile (12 a - d) aufgespannten Pyramide verlaufen parallel zu den längsseitigen Rändern (14 a, b) bzw. stirnseitigen Rändern (15 a, 15 b) der Parabolrinne.

Unterhalb des Anschlags (16) für die Drahtseile (12 a - d) weist die Stütze (10) eine in axialer Richtung der Stütze (10) wirksame Federung (17) auf, die die Drahtseile (12 a - d) vorspannt. Die Federung (17) ist nach Art einer Teleskopfederung aufgebaut und zusätzlich mit einem nicht dargestellten Federdämpfer ausgerüstet, der den Aufbau von Schwingungen in dem Parabolrinnenkollektor verhindert.

An der Spitze der Stütze (10) ist eine hohlzylindrische Halterung (18) zur Aufnahme des rohrförmigen Absorbers (7) angeordnet, der sich in der Brennlinie der durch die Paneele (5) aufgespannten Parabolrinne befindet.

Wie bereits ausgeführt, wird die Tragkonstruktion (4) in Längsrichtung (8)über an den Rändern der Paneele (5) zwischen den Stützspanten (9 a, b, c) verschraubte Längsaussteifungen (19 a - d) stabilisiert. Zusätzlich können an der Unterseite V-Profile (20) angeordnet sein.

Der Unterbau (2) weist insgesamt drei Beine (21 a - c) auf, wobei die Beine (21 a, b) durch einen Querholm (22) miteinander verbunden sind. Die Verwendung von drei Beinen erlaubt die sichere Aufstellung auch in unebenem Gelände. Das Bein (21 c), jedoch auch die Beine (21 a, b) sind in Klemmschellen (23) geführt und lassen sich daher für eine horizontale Ausrichtung des Parabolrinnenkollektors (1) unproblematisch in der Höhe einstellen. Zwischen dem Bein (21 c) und dem durch die Beine (21 a, b) abgestützten Querrohr (22) erstreckt sich ein zylindrisches Tragelement (24) auf dessen Oberseite die jedem Stützspant (9 a - c) zugeordnete Drehlagerung (3) angeordnet ist. Jede Drehlagerung (3) besteht aus zwei parallel zueinander angeordneten Wangen (25) zwischen denen jeweils eine Drehachse (27 a - c) gelagert ist, um die der Parabolrinnenkollektor schwenkbar ist. Sämtliche Drehachsen (27 a - c) fluchten miteinander und erstrecken sich durch miteinander fluchtende Durchgänge in halbkreisförmigen Ansätzen (26 a - c) an den Stützspanten (9 a - c).

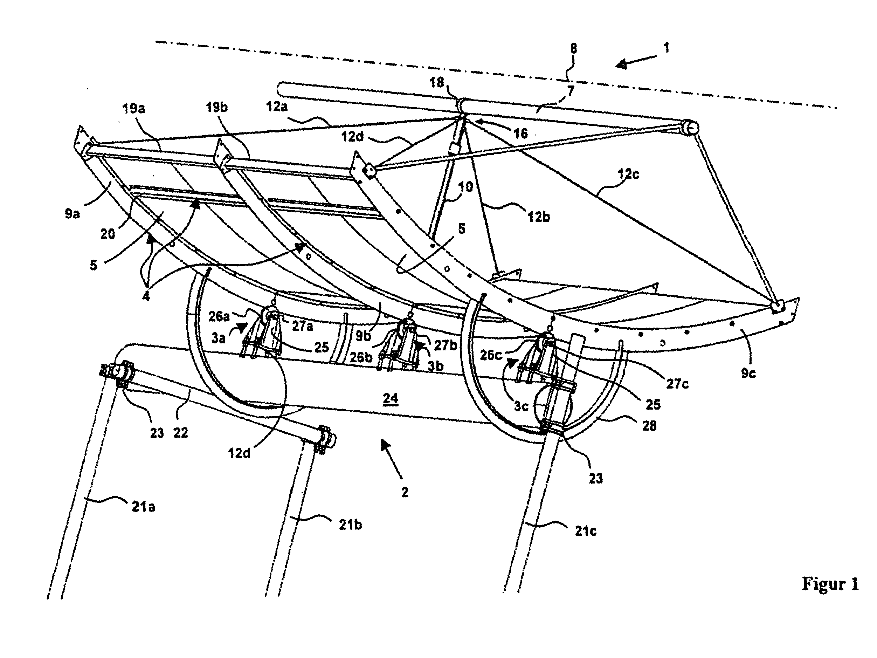

Die Nachführung des Parabolrinnenkollektors erfolgt durch Verschwenken des Parabolrinnenkollektors (1) um die durch die Drehlagerung (3) definierte Drehachse (27 a - c), wobei die Schwenkbewegung mittels eines an der Tragkonstruktion (4) angreifenden, der Übersichtlichkeit halber in den Figuren 1 und 2 nicht dargestellten Drehantriebs erfolgt, dessen Abtrieb zur Reduzierung von Torsionskräften in dem Parabolrinnenkollektor vorzugsweise an beiden stirnseitigen Stützspanten (9 a, 9 c), beispielsweise an den sich halbkreisförmig nach unten erstreckenden Profilen (28), angreift.

Sämtliche an dem Parabolrinnenkollektor senkrecht zur Längsachse (8) angreifende Windkräfte werden direkt über die Drehlagerung (3) auf den Unterbau (2) und die Fundamente abgeleitet. Es entstehen durch diese Kräfte keine Biegespannungen in dem drehbaren Parabolrinnenkollektor (1).

Da statische Windkräfte auch Torsionskräfte in dem Parabolrinnenkollektor und damit dem Spiegel erzeugen, muss der Parabolrinnenkollektor (1) auch gegen Torsion ausgesteift sein. Die Torsionssteifigkeit wird durch die pyramidale Abspannung auf der Oberseite des Parabolrinnenkollektors erreicht.

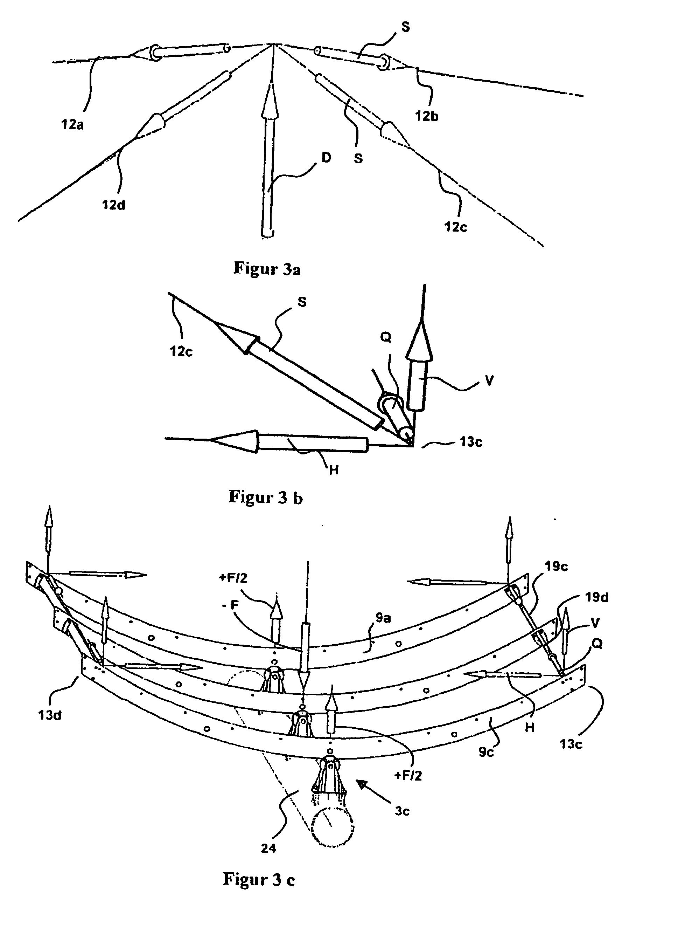

Wie aus **Fig. 3 a)** ersichtlich wird mittels einer vorgespannten Federung in Form einer Druckfeder in Richtung der senkrechten stabförmigen Stütze (10) eine Druckkraft **D** aufgebaut, die durch vektorielle Zerlegung ihrerseits in den Drahtseilen (12 a - d) eine konstante Seilspannung **S** in Richtung der Drahtseile erzeugt.

Aus **Figur 3 b)** in Verbindung mit **Figur 3 c)** ist erkennbar, dass diese durch die Seilspanung **S** erzeugte Zugkraft auch als Vektor auf die Endbereiche (13 a - d) der Stützspanten (9a - c) wirkt. Zerlegt man diesen Vektor in Komponenten, ist ersichtlich, dass eine Querkraft **Q** als Druckkraft die Längsaussteifungen (19 a - d) belastet. Die horizontale Komponente **H** und die vertikale Komponente **V** der Kraft wirken beide auf die Endbereiche (13 a - d) der Stützspanten (9 a - c) und erzeugen über die Hebelwirkung in dem Stützspant (9 a, 9 c) ein Biegemoment, dass durch dessen Struktur aufgenommen werden muss.

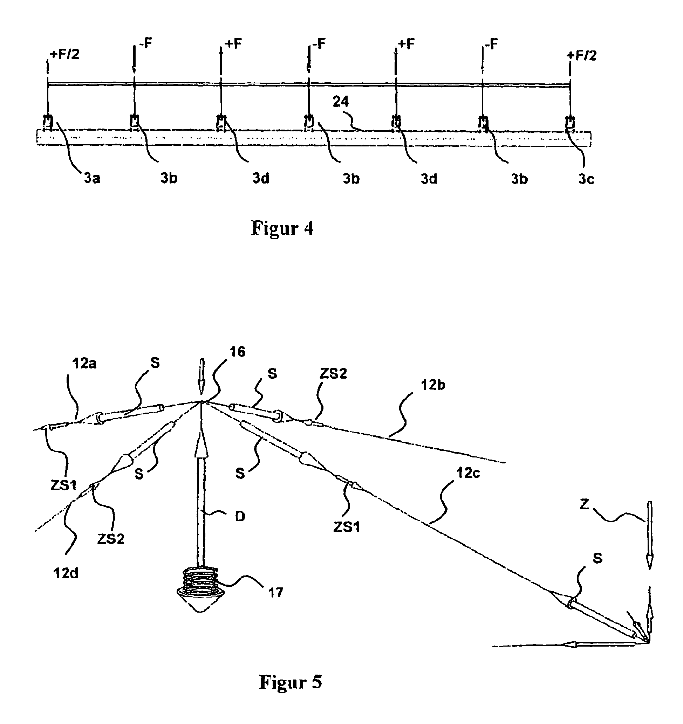

In **Figur 4** ist in einem Längsschnitt durch einen sieben Stützspanten aufweisenden Parabolrinnenkollektor dargestellt, wie sich die Reaktionskräfte **F** auf die jeweiligen Lagerungen (3 a - d) auswirken. Man erkennt, dass die Wirkrichtung der Reaktionskräfte **F** alterniert und die Summe aller Reaktionskräfte Null ergibt. Die Reaktionskraft, die durch jede Stütze in den zugeordneten Lagerungen (3 b) hervorgerufen wird, ist viermal so groß, wie die vertikale Komponente **V** der einzelnen Seilspannungen **S.** Die Reaktionskräfte **F/2** an den Endlagern (3 a, 3 c) sind nur halb so groß wie die der übrigen Lager (3 b, 3 d) zwischen den Endlagern (3 a, 3 c).

Die in den Figuren 3 a) - c) und 4 dargestellten statischen Kraftverhältnisse berücksichtigen keine äußere Krafteinwirkung, beispielsweise durch angreifende Windlasten. Wenn äußere Kräfte einwirken, reagiert das statische System derart, dass sich zwar alle Reaktionskräfte **F zu 0** ausgleichen, jedoch Verschiebungen zwischen der Höhe der an den Lagerungen (3 a - d) auftretenden Reaktionskräfte **F** entstehen, deren Größe begrenzt werden muss, um die Verformung der Parabeloberfläche des Spiegels bei allen zugelassenen äußeren Kräften so zu begrenzen, dass keine Energieverluste durch Defokussierung zu erwarten sind.

Die wichtigsten äußeren Kräfte sind die Windlasten, die an dem als aerodynamisches Profil wirkenden Parabolrinnenkollektor angreifen, der auf die Luftanströmung mit statischen und dynamischen Kräften reagiert, wobei die dynamischen Kräfte aufgrund von Resonanzschwingungen zu Beschädigungen des Parabolrinnenkollektors führen können.

In **Figur 5** ist schematisch dargestellt, wie sich eine z. B. durch Wind verursachte asymmetrisch wirkende Zusatzkraft **Z,** simuliert durch eine Vertikalkraft in einem Endbereich (13 c), auf die innere Kräfteverteilung des Parabolrinnenkollektors auswirkt. Infolge der Zusatzkraft **Z** erhöht sich die ursprüngliche Seilspannung **S** um einen Betrag **ZS 1** in den Drahtseilen (12 a, 12 c), der sich aus der vektoriellen Zerlegung der einwirkenden Kraft in Verlaufsrichtung des Seils ergibt, während sich die Seilkraft **S** in den Drahtseilen (12 b, 12 d) längs der kreuzenden Seitenkante der Pyramide um einen Betrag **ZS 2** verringert.

Die Federung (17) wird aufgrund der geänderten Druckkraft **D** zusammengedrückt. Der Anschlag (16) der Drahtseile (12 a - d) verschiebt sich somit geringfügig nach unten. In dem Parabolrinnenkollektor tritt eine Verdrehung um die Längsachse auf. Den Widerstand gegen diese Verdrehung bezeichnet man als Torsionswiderstand. Er ist der entscheidende Faktor für die Aufnahme der Windlasten. Der Torsionswiderstand wird maßgeblich durch die Quersteifigkeit der Stützspanten (9 a - c) zur Längsachse des Parabolrinnenkollektors, die Längenausdehnung der Drahtseile (12 a - d) und die Federsteifigkeit der Federung (17) bestimmt. Konstruktiv wird die Steifigkeit der Stützspanten (9 a - c) und die Längenausdehnung der Drahtseile vorzugsweise so bestimmt, dass durch die Verschiebung des Anschlags (16) gegen die Kraft der Federung (17) fast die gesamte Zusatzkraft **Z** aufgenommen wird, wobei der Verschiebeweg so zu begrenzen ist, dass noch alle auf die Spiegelfolie (6) auftreffenden Sonnenstrahlen auf den Absorber (7) auftreffen.

Eine gebogene Fläche, wie sie die Spiegelfläche des Parabolrinnenkollektor (1) darstellt, reagiert bei Anströmung ähnlich wie eine Flugzeugtragfläche. Das bedeutet, dass bei gegebenen Strömungsverhältnissen durch den momentan herrschenden Wind, die Spiegelfläche durch die Sonnennachführung in Schwenkstellungen gelangen kann, die durch Resonanzschwingungen zur Zerstörung führen können.

Wird ein waagerecht ausgerichteter Parabolrinnenkollektor vom Wind angeströmt, so erzeugt der Wind Widerstands- und Abtriebskräfte, die zunächst nur statisch als Biege- und Torsionsbelastungen auf den Kollektor wirken. Wird der Spiegel weiter in den Wind gedreht, erhöht sich Abtrieb und Widerstand weiter bis der Abtrieb maximal wird und danach durch Wirbelablösungen rapide abnimmt. Es bildet sich hinter der Abrisskante eine so genannte "Karman'sche Wirbelstraße". Die Wirbel erzeugen periodisch auf den Kollektor wirkende Kräfte. Die Anregungsfrequenz dieser Kräfte liegt bei den derzeitigen Spiegelgeometrien bei etwa zwei bis drei Hertz. Der erfindungsgemäße Spiegel ist nun so ausgelegt, dass seine untere Eigenfrequenz mindestens doppelt so hoch ist, wie die Anregungsfrequenz von etwa zwei bis drei Hertz. Konstruktiv wird dies durch die erhöhte Steifigkeit bei gleichzeitig reduzierter Masse des erfindungsgemäßen Parabolrinnenkollektors erreicht, insbesondere aufgrund der leichten, an jedem Stützspant gelagerten Tragkonstruktion. Untersuchungen haben gezeigt, dass der erfindungsgemäße Kollektor bauartbedingt auch dynamischen Kraftanregungen problemlos standhalten kann.

Auf dem Unterbau (2), der mit relativ großen Fertigungstoleranzen von gering qualifizierten Betrieben erstellt werden kann, werden mitgelieferte Drehlagerungen (3 a - d) so montiert, dass durch Einstellmöglichkeiten der Drehlagerungen (3 a - d) lediglich die zwischen deren Wangen angeordneten Drehachsen (27 a - c) fluchtend zueinander ausgerichtet werden müssen. Eine präzise Einstellung des Abstandes zwischen den Lagerungen ist dagegen nicht nötig, da vorzugsweise nur eine Drehlagerung (3 a) in Längsrichtung (8) unverschieblich als Festlager und alle anderen Lagerungen (3 b, c, d) in Längsrichtung verschieblich als Loslager angeordnet sind, insbesondere auch um temperaturbedingte Ausdehnungsänderungen zu kompensieren.

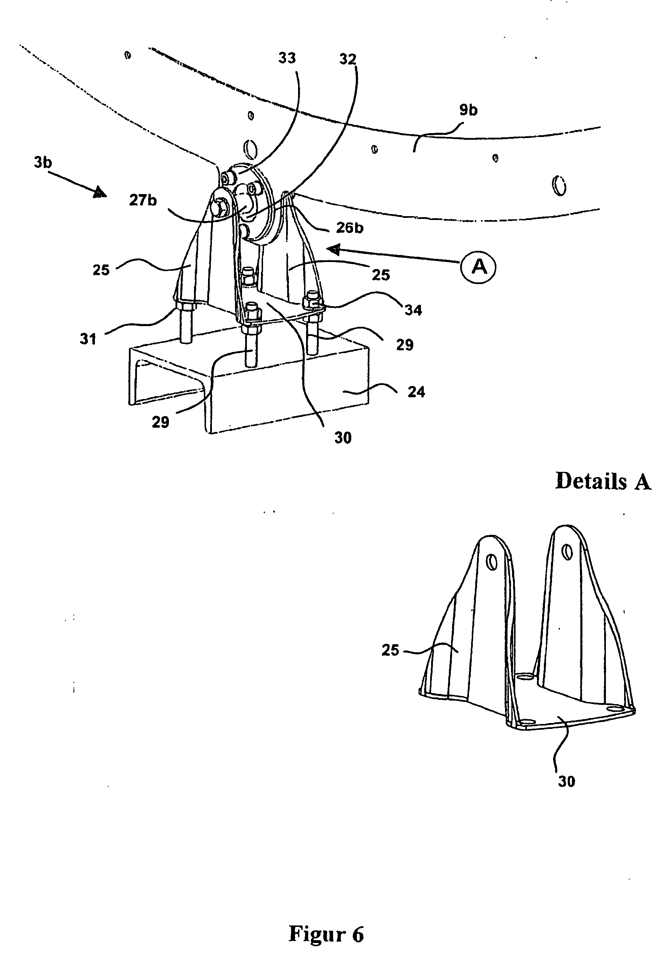

Zur Erläuterung der Einstellmöglichkeit der Drehlagerungen (3 a - d) zeigt Figur 6 als Detail lediglich eine gegenüber dem Tragelement (24) des Unterbaus (2) verstellbare Drehlagerung (3 b). Abweichend zum Ausführungsbeispiel nach den Figuren 1 und 2 ist das lediglich teilweise dargestellte Tragelement (24) hier als U-Profil und nicht als hohlzylindrisches Rohr ausgeführt. Entscheidend für die Wahl des Tragelementes ist lediglich, dass dieses aufgrund der Profilierung biegesteif ist. Mit der Oberseite des U-förmigen Tragelementes (24) sind vier senkrecht nach oben weisende Stehbolzen (29) zur justierbaren Aufnahme der Drehlagerung (3 b) befestigt. Die Drehlagerung (3 b) umfasst parallele, sich senkrecht nach oben erstreckende Wangen (25), die an ihrem unteren Rand über eine Platte (30) im Abstand zueinander gehalten werden. Die Platte (30) besitzt in ihren Eckbereichen vier Langlöcher, deren Durchlassquerschnitt größer als der Durchmesser der Stehbolzen (29) ist.

Über die an der Unterseite der Platte (30) anliegenden Stützmuttern (31) lässt sich die Höhe der Drehlagerung (3 b) präzise justieren. Die Langlöcher erlauben eine begrenzte Verschiebung der Platte (30) in der Plattenebene und damit zusammen mit der Höhenjustierung durch die Stützmuttern (31) eine fluchtende Ausrichtung der Drehachse (27 b) zu den übrigen Drehachsen (27 a, c) der benachbarten Drehlagerungen (3 a, 3 b). Die in Figur 6 dargestellte Drehlagerung (3 b) ist als Loslager ausgeführt. Zu diesem Zweck ist der in dem Durchgang des Ansatzes (26 b) des Stützspantes (9 b) fixierte Lagerring (32) auf der Achse (27 b) mit axialem Spiel geführt. Der Lagerring (32) wird im dargestellten Ausführungsbeispiel in dem Durchgang des Ansatzes (26) durch zwei auf beiden Seiten des Ansatzes (26 b) anliegende und miteinander verschraubte Spannringe (33) fixiert. Nach korrekter Ausrichtung der Drehlagerungen (3 a - c) zueinander werden diese durch die von oben auf die Stehbolzen aufgeschraubten Kontermuttern (34) festgelegt.

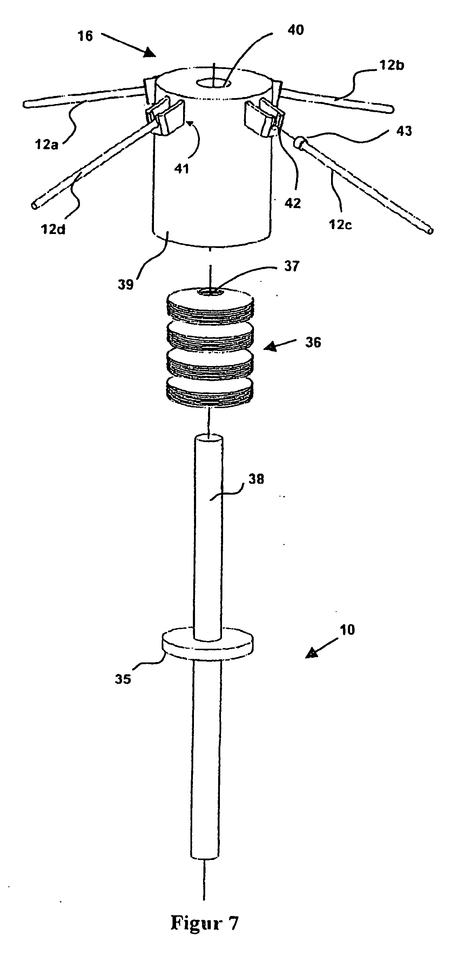

Nachfolgend wird anhand von Figur 7 eine bevorzugte Stütze (10) für die pyramidale Abspannung der Tragkonstruktion (4) näher erläutert:
Die stabförmige Stütze (10) wird an ihrer unteren Stirnseite von einer an jedem zweiten Stützspant (9 b) angeordneten, in Figur 7 nicht dargestellten Halterung aufgenommen. Im Abstand zu dieser an der unteren Stirnseite der Stütze (10) angreifenden Halterung ist ein in Längsrichtung der stabförmigen Stütze (10) unverschiebbarer Stützflansch (35), die Stütze (10) umgebend, angeordnet. Auf dem Stützflansch (35) stützt sich eine Tellerfedersäule (36) ab, wobei die Durchgänge (37) der zur Tellerfedersäule (36) übereinander geschichteten Einzeltellerfedern mindestens dem zylindrischen Querschnitt der stabförmigen Stütze (10) entsprechen, so dass die Tellerfedersäule (36) von dem oberhalb des Stützflansches (35) befindlichen Abschnitt (38) der Stütze (10) aufgenommen werden kann.

Über die Tellerfedersäule (36) ist eine hohlzylindrische Hülse (39) gestülpt, die an der oberen Stirnseite einen Durchgang (40) für den Abschnitt (38) der Stütze (10) aufweist, während die untere Stirnseite vollständig geöffnet ist. Der Innendurchmesser der hohlzylindrischen Hülse (39) ist größer als der Außendurchmesser der Tellerfedersäule sowie des Stützflansches (35), so dass die Hülse (39) mit ihrer Innenmantelfläche entlang des äußeren Randes des Stützflansches (35) gleiten kann.

Die Hülse (39) bildet zugleich den Anschlag (16) für die vier Drahtseile bzw. dünnen Stäbe (12 a - d) der pyramidalen Abspannung der Tragkonstruktion (4) des Parabolrinnenkollektors (1).

Konstruktiv ist der Anschlag (16) an der Hülse (39) durch vier gleichmäßig über den Umfang der Hülse (39) an deren oberen Rand angeordnete Halterungen (41) ausgeführt, wobei jede Halterung (41) an ihrer radial nach außen weisenden Stirnseite eine nach oben offene und sich in vertikaler Richtung erstreckende Nut (42) aufweist. Verdickte Enden (43) der Drahtseile (12 a - d) hintergreifen die Nuten (42) und können daher bei der Montage problemlos mit der Hülse (39) verbunden werden.

Vorzugsweise sind die Einzeltellerfedern der Tellerfedersäule (36) gleichsinnig geschichtet. Hierdurch vervielfacht sich die Federkraft, ohne dass sich der Federweg verändert. Hierdurch wird der Forderung Rechnung getragen, dass die über die Drahtseile (12 a - d) in die Stütze (10) eingeleiteten Kräfte vollständig von der Tellerfedersäule (36) aufgenommen werden können, ohne einen maximal zulässigen Verschiebeweg des Anschlags (16) zu überschreiten, der eine Defokussierung des Parabolrinnenkollektors zur Folge hätte. Ein weiterer entscheidender Vorteil von Tellerfedersäulen besteht in der bei Tellerfedern auftretenden Reibung, die der von außen aufgebrachten Kraft entgegenwirkt. Die Reibungskräfte treten als Hysterese in der Kraft-Wegekennlinie der Tellerfedersäule in Erscheinung. Die Reibungskräfte werden erzeugt durch
a) Reibung zwischen der die Kraft einleitenden Hülse (39) und den Einzeltellerfedern der Tellerfedersäule (36),
b) Reibung zwischen den sich berührenden Oberflächen der gleichsinnig ineinander liegenden Einzeltellerfedern der Tellerfedersäule (36) sowie
c) Reibung zwischen dem Abschnitt (38), der Stütze (10) und den Durchgängen (37) der Tellerfedersäule (36).

Die Reibung bewirkt zugleich, dass die Federung durch die Tellerfedersäule (36) gegen Schwingungen gedämpft ist. Diese Schwingungsdämpfung, die bei anderen Federformen durch einen gesonderten Schwingungsdämpfer erreicht werden muss, lässt sich daher in konstruktiv vorteilhafter und preiswerter Art und Weise durch Verwendung einer zumindest teilweise gleichsinnig geschichteten Tellerfedersäule in die Stütze (10) integrieren.

Selbstverständlich liegt es im Rahmen der Erfindung, die anhand von Figur 7 näher erläuterte Stütze (10) unmittelbar mit dem Stützspant (9 b) zu verbinden. Des Weiteren ist die Erfindung nicht auf die bevorzugte Ausführungsform einer stabförmigen Stütze beschränkt. Entscheidend für die Ausführung der Stütze ist lediglich, dass die Kraftübertragungsmittel die Seitenkanten einer geraden Pyramide bilden, während die in der Symmetrieebene der parabolisch geformten reflektierenden Oberfläche liegende Spitze von den an der Stütze zusammenlaufenden Kraftübertragungsmitteln gebildet wird. Des Weiteren ist die Stütze symmetrisch zu der Symmetrieebene der parabolisch geformten reflektierenden Oberfläche sowie in Längsrichtung zu dem die Stütze tragenden Stützspant auszubilden, damit eine gleichmäßige Krafteinleitung in den Stützspant gewährleistet ist.

**Bezugszeichenliste:**

| **Nr.** | **Bezeichnung** | **Nr.** | **Bezeichnung** |
|---|---|---|---|
| 1. | Parabolrinnen-kollektor | 23. | Klemmschelle |
| 2. | Unterbau | 24. | Tragelement |
| 3 a - d | Drehlagerungen | 25. | Wange |
| 4. | Tragkonstruktion | 26 a - c | Ansätze |
| 5. | Paneele | 27 a - c | Drehachsen |
| 6. | Spiegelfolie | 28. | Profil (Antrieb) |
| 7. | Absorber | 29. | Stehbolzen |
| 8. | Längsrichtung | 30. | Platte |
| 9 a - c | Stützspanten | 31. | Stützmutter |
| 10. | Stütze | 32. | Lagerring |
| 11. | Abstand | 33. | Spannringe |
| 12 a - d | Drahtseile | 34. | Kontermutter |
| 13 a - d | Endbereiche | 35. | Stützflansch |
| 14 a, b | längsseitige Ränder | 36. | Tellerfedersäule |
| 15 a, b | stirnseitige Ränder | 37. | Durchgang |
| 16. | Anschlag | 38. | Abschnitt |
| 17. | Federung | 39. | Hülse |
| 18. | Halterung | 40. | Durchgang |
| 19 a - d | Längsaussteifungen | 41. | Halterung |
| 20. | V-Profil | 42. | Nut |
| 21 a - c | Beine | 43. | verdicktes Ende |
| 22. | Querholm | | |

## Patentansprüche

1. Parabolrinnenkollektor mit einer reflektierenden Oberfläche, die das Sonnenlicht auf einen in der Brennlinie verlaufenden Absorber bündelt, wobei die reflektierende Oberfläche auf mindestens einem Paneel mit einem parabolischen Querschnitt und einer in Längsrichtung des Parabolrinnenkollektors geradlinigen Ausdehnung angeordnet ist und an der konvexen Unterseite jedes Paneels eine Tragkonstruktion angeordnet ist, die gelenkig mit einem den Parabolrinnenkollektor tragenden Unterbau verbunden ist, mindestens vier längliche Kraftübertragungsmittel (12 a - d) an der Stütze angeordnet sind und wobei sich die Kraftübertragungsmittel (12 a- d) zwischen der Stütze (10) und der Tragkonstruktion (4) erstrecken, wobei die Kraftübertragungsmittel (12 a - d) die Seitenkanten einer geraden Pyramide bilden, deren in der Symmetrieebene der parabolisch geformten reflektierenden Oberfläche (6) liegende Spitze von den an der Stütze zusammenlaufenden Kraftübertragungsmitteln gebildet wird **dadurch gekennzeichnet,**
- **dass** die Tragkonstruktion (4) mindestens drei an der konvexen Unterseite des Parabolrinnenkollektors (1) angeordnete, sich quer zu dessen Längsrichtung (8) erstreckende Stützspanten (9 a - c) aufweist, wobei ausgehend von den stirnseitigen Stützspanten (9 a, 9 c) an jedem zweiten Stützspant (9 b) eine sich nach oben erstreckende Stütze (10) angeordnet ist, und
- **dass** an jedem Stützspant (9 a - c) eine Drehlagerung (3) zur drehbeweglichen Anordnung des Parabolrinnenkollektors (1) um eine zu dessen Längsachse (8) parallele Drehachse (27 a - c) angeordnet ist.

2. Parabolrinnenkollektor nach Anspruch 1, **dadurch gekennzeichnet, dass** die Kanten der Grundfläche jeder durch die Kraftübertragungsmittel (12 a - d) aufgespannten Pyramide parallel zu den längs- bzw. stirnseitigen Rändern (14 a,14 b,15 a,15 b) des Parabolrinnenkollektors (1) verlaufen.

3. Parabolrinnenkollektor nach Anspruch 1 oder 2, **dadurch gekennzeichnet, dass** die Kraftübertragungsmittel (12 a - d) Zugmittel oder Stäbe sind.

4. Parabolrinnenkollektor nach Anspruch 1 bis 3, **dadurch gekennzeichnet, dass** ausgehend von den stirnseitigen Stützspanten (9 a, 9 c) an jedem zweiten Stützspant (9 b) eine an der konvexen Unterseite des Parabolrinnenkollektors angeordnete Halterung (9 b) für die sich nach oben erstreckende Stütze (10) angeordnet ist und im Abstand (11) zu der Befestigung der Stütze (10) an der Halterung (9 b) die Kraftübertragungsmittel (12 a - d) an der Stütze angeordnet sind.

5. Parabolrinnenkollektor nach einem der Ansprüche 1 bis 4, **dadurch gekennzeichnet, dass** sich die Kraftübertragungsmittel (12 a - d) zwischen jeder Stütze (10) und den äußeren Endbereichen (13 a -d) der benachbarten Stützspanten (9 a, 9 c) erstrecken.

6. Parabolrinnenkollektor nach einem der Ansprüche 1 bis 5, **dadurch gekennzeichnet, dass** die insbesondere stabförmige Stütze (10) unterhalb eines Anschlags (16) für die Kraftübertragungsmittel (12 a - d) eine in Richtung des Anschlags (16) wirksame Federung (17) aufweist.

7. Parabolrinnenkollektor nach Anspruch 6, **dadurch gekennzeichnet, dass** der Federung (17) ein Schwingungsdämpfer zugeordnet ist.

8. Parabolrinnenkollektor nach Anspruch 6 oder 7, **dadurch gekennzeichnet, dass** die Federung mindestens eine Tellerfeder umfasst.

9. Parabolrinnenkollektor nach einem der Ansprüche 1 bis 8, **dadurch gekennzeichnet, dass** die insbesondere stabförmige Stütze (10) zugleich als Halterung (18) für den Absorber ausgestaltet ist.

10. Parabolrinnenkollektor nach einem der Ansprüche 4 bis 9, **dadurch gekennzeichnet, dass** an jedem Stützspant (9 a - c) mehrere, die gewünschte Parabelform für jede Paneele (5) und die darauf angeordnete reflektierende Oberfläche (6) vorgebende Verbindungselemente angeordnet sind.

11. Parabolrinnenkollektor nach einem der Ansprüche 1 bis 10, **dadurch gekennzeichnet, dass** die reflektierende Oberfläche (6) lösbar mit jedem Paneel (5) des Parabolrinnenkollektors (1) verbunden ist.

12. Parabolrinnenkollektor nach einem der Ansprüche 1 bis 11, **dadurch gekennzeichnet, dass** die reflektierende Oberfläche (6) Bestandteil einer auf jede Paneele (5) aufgebrachten Folie ist.

13. Parabolrinnenkollektor nach einem der Ansprüche 4 bis 12, **dadurch gekennzeichnet, dass** in Längsrichtung (8) des Parabolrinnenkollektors (1) zwischen den Stützspanten (9 a - c) Längsaussteifungen (19 a - d, 20)angeordnet sind.

14. Parabolrinnenkollektor nach einem der Ansprüche 1 bis 13, **dadurch gekennzeichnet, dass** die an jedem Stützspant (9 a - c) angeordnete Drehlagerung (3 a - d) an dem Unterbau (2) justierbar befestigt ist.

## Claims

1. A parabolic trough collector having a reflecting surface which concentrates the sunlight onto an absorber running in the focal line, wherein the reflecting surface is disposed on at least one panel having a parabolic cross-section and a rectilinear extension in the longitudinal direction of the parabolic trough collector and a supporting construction is disposed on the convex underside of each panel, which supporting construction is connected in an articulated manner to a substructure carrying the parabolic trough collector, at least four elongate force transmission means (12a-d) are disposed on the stanchion and wherein the force transmission means (12a-d) extend between the stanchion (10) and the supporting construction (4), wherein the force transmission means (12a-d) form the lateral edges of a right pyramid, the apex whereof lying in the plane of symmetry of the parabolically shaped reflecting surface (6) is formed by the force transmission means converging at the stanchion, **characterised in**
- **that** the supporting construction (4) comprises at least three supporting ribs (9a-c) disposed on the convex underside of the parabolic trough collector (1) and extending transversely to the longitudinal direction (8) thereof, wherein starting from the end supporting ribs (9a, 9c) an upwardly extending stanchion (10) is disposed on every second supporting rib (9b) and
- **that** at each supporting rib (9a-c) a rotary bearing (3) is disposed for the rotary arrangement of the parabolic trough collector (1) about an axis of rotation (27a-c) parallel to the longitudinal axis (8) thereof.

2. The parabolic trough collector according to claim 1, **characterised in that** the edges of the base surface of each pyramid spanned by the force transmission means (12a-d) run parallel to the longitudinal or end edges (14a, 14b, 15a, 15b) of the parabolic trough collector (1).

3. The parabolic trough collector according to claim 1 or 2, **characterised in that** the force transmission means (12a-d) are traction means or rods.

4. The parabolic trough collector according to claim 1 to 3, **characterised in that** starting from the end supporting ribs (9a, 9c) a holder (9b) disposed on the convex underside of the parabolic trough collector for the upwardly extending stanchion (10) is disposed on every second supporting rib (9b) and the force transmission means (12a-d) are disposed on the stanchion (10) at a distance (11) from the fastening of the stanchion (10) on the holder (9b).

5. The parabolic trough collector according to any one of claims 1 to 4, **characterised in that** the force transmission means (12a-d) extend between each stanchion (10) and the outer end regions (13a-d) of the neighbouring supporting ribs (9a, 9c).

6. The parabolic trough collector according to any one of claims 1 to 5, **characterised in that** underneath a stop (16) for the force transmission means (12a-d) the in particular rod-shaped stanchion (10) comprises a spring assembly (17) acting in the direction of the stop (16).

7. The parabolic trough collector according to claim 6, **characterised in that** the spring assembly (17) is assigned a vibration damper.

8. The parabolic trough collector according to claim 6 or 7, **characterised in that** the spring assembly comprises at least one disk spring.

9. The parabolic trough collector according to any one of claims 1 to 8, **characterised in that** the in particular rod-shaped stanchion (10) is at the same time configured as a holder (18) for the absorber.

10. The parabolic trough collector according to any one of claims 4 to 9, **characterised in that** a plurality of connecting elements which predefine the desired parabolic shape for each panel (5) and the reflecting surface (6) disposed thereon are disposed on each supporting rib (9a-c).

11. The parabolic trough collector according to any one of claims 1 to 10, **characterised in that** the reflecting surface (6) is detachably connected to each panel (5) of the parabolic trough collector (1).

12. The parabolic trough collector according to any one of claims 1 to 11, **characterised in that** the reflecting surface (6) is a component part of a foil applied to each panel (5).

13. The parabolic trough collector according to any one of claims 4 to 12, **characterised in that** longitudinal bracings (19a-d, 20) are arranged in the longitudinal direction (8) of the parabolic trough collector (1) between the supporting ribs (9a-c).

14. The parabolic trough collector according to any one of claims 1 to 13, **characterised in that** the rotary bearing (3a-d) disposed on each supporting rib (9a-c) is adjustably fastened to the substructure (2).

## Revendications

1. Miroir cylindro-parabolique doté d'une surface réfléchissante, qui concentre la lumière du soleil sur un absorbeur agencé dans la ligne de combustion, la surface réfléchissante étant disposée sur au moins un panneau avec une section parabolique et une extension rectiligne dans le sens longitudinal du miroir cylindro-parabolique et une construction support étant disposée sur le côté inférieur convexe de chaque panneau, laquelle est reliée de façon articulée à une infrastructure portant le miroir cylindro-parabolique,
au moins quatre moyens de transmission de force (12 a - d) oblongs étant disposés sur le support et les moyens de transmission de force (12 a - d) s'étendant entre le support (10) et la structure porteuse (4), les moyens de transmission de force (12 a - d) formant les arêtes latérales d'une pyramide droite, dont la pointe disposée dans le plan de symétrie de la surface (6) réfléchissante et formée de façon parabolique est formée par les moyens de transmission de force convergents sur le support, **caractérisé en ce que**
- la structure porteuse (4) présente au moins trois membrures support (9 a - c) disposées sur le côté inférieur convexe du miroir cylindro-parabolique (1) et s'étendant transversalement à la direction longitudinale (8) de ce miroir, un support (10) s'étendant vers le haut étant disposé à partir des membrures support (9 a - c) côté avant sur chaque seconde membrure support (9 b), et
- **en ce qu'**un logement rotatif (3) est disposé sur chaque membrure support (9 a - c) pour l'agencement mobile en rotation du miroir cylindro-parabolique (1) autour d'un axe de rotation (27 a - c) parallèle à l'axe longitudinal (8) du miroir.

2. Miroir cylindro-parabolique selon la revendication 1, **caractérisé en ce que** les arêtes de la surface de base de chaque pyramide tendue par les moyens de transmission de force (12 a - d) sont agencés parallèlement aux bords (14 a, 14 b, 15 a, 15 b) côté longitudinal et côté avant du miroir cylindro-parabolique (1).

3. Miroir cylindro-parabolique selon la revendication 1 à 2, **caractérisé en ce que** les moyens de transmission de force (12 a-d) sont des moyens de traction ou des barres.

4. Miroir cylindro-parabolique selon les revendications 1 à 3, **caractérisé en ce qu'**une fixation (9 b) disposée sur le côté inférieur convexe du miroir cylindro-parabolique pour le support (10) s'étendant vers le haut est disposée à partir des membrures support (9 a, 9 c) côté avant sur chaque seconde membrure support (9 b) et les moyens de transmission de force (12 a - d) sur le support sont disposés à distance (11) de la fixation du support (10) sur la fixation (9 b).

5. Miroir cylindro-parabolique selon l'une quelconque des revendications 1 à 4, **caractérisé en ce que** les moyens de transmission de force (12 a - d) s'étendent entre chaque support (10) et les zones d'extrémité (13 a - d) extérieures des membrures support (9 a, 9 c) voisines.

6. Miroir cylindro-parabolique selon l'une quelconque des revendications 1 à 5, **caractérisé en ce que** le support (10) en particulier en forme de barre présente une suspension (17) efficace à la direction de la butée (16) au-dessous d'une butée (16) pour les moyens de transmission de force (12 a - d).

7. Miroir cylindro-parabolique selon la revendication 6, **caractérisé en ce qu'**un amortisseur de vibration est attribué à la suspension (17).

8. Miroir cylindro-parabolique selon la revendication 6 ou 7, **caractérisé en ce que** la suspension présente au moins un ressort à diaphragme.

9. Miroir cylindro-parabolique selon l'une quelconque des revendications 1 à 8, **caractérisé en ce que** le support (10) en particulier en forme de barre est conçu en même temps comme fixation (18) pour l'absorbeur.

10. Miroir cylindro-parabolique selon l'une quelconque des revendications 4 à 9, **caractérisé en ce que** plusieurs éléments de liaison prédéfinissant la forme de parabole souhaitée pour chaque panneau (5) et la surface (6) réfléchissante disposée dessus sont disposés sur chaque membrure support (9 a - c).

11. Miroir cylindro-parabolique selon l'une quelconque des revendications 1 à 10, **caractérisé en ce que** la surface (6) réfléchissante est reliée de façon amovible à chaque panneau (5) du miroir cylindro-parabolique (1).

12. Miroir cylindro-parabolique selon l'une quelconque des revendications 1 à 11, **caractérisé en ce que** la surface (6) réfléchissante fait partie d'une feuille appliquée sur chaque panneau (5).

13. Miroir cylindro-parabolique selon l'une quelconque des revendications 4 à 12, **caractérisé en ce que** des renforts longitudinaux (19 a - d, 20) sont disposés dans la direction longitudinale (8) du miroir cylindro-parabolique (1) entre les membrures support (9 a - c).

14. Miroir cylindro-parabolique selon l'une quelconque des revendications 1 à 13, **caractérisé en ce que** la fixation rotative (3 a - d) disposée sur chaque membrure support (9 a - c) est fixée de façon ajustable sur l'infrastructure (2).
